# EUROPÄISCHE PATENTSCHRIFT

(11) **EP 0 708 313 B1**
(45) Veröffentlichungstag und Bekanntmachung des Hinweises auf die Patenterteilung: **10.06.1998**
(21) Anmeldenummer: 95116580.2
(22) Anmeldetag: 20.10.1995
(51) Int. Cl.: G01F 1/66, G01N 29/02

(54) **Ultraschall-Durchflussmessgerät**
Ultrasonic flowmeter
Débitmètre ultrasonique

(30) Priorität: 20.10.1994 DE 4437588
(43) Veröffentlichungstag der Anmeldung: 24.04.1996
(73) Patentinhaber: SIEMENS AKTIENGESELLSCHAFT, 80333 München (DE)
(72) Erfinder: Greppmaier, Paul, D-90475 Nürnberg (DE)

(56) Entgegenhaltungen:
- EP-A- 0 559 938
- EP-A- 0 650 034
- EP-A- 0 650 035
- DE-C- 4 336 370

## Beschreibung

Die vorliegende Erfindung betrifft ein Ultraschall-Durchflußmeßgerät nach dem Oberbegriff des Anspruchs 1 (DE 34 28 058 A1).

Derartige Durchflußmeßgeräte sind beispielsweise aus der DE 35 44 456 Al und der EP 0 559 938 B1 bekannt.

Die dort beschriebenen Durchflußmeßgeräte sind insofern noch nicht ganz optimal, als in die Armatur ein Meßrohr eingeführt werden muß. Dies ist insofern nachteilig, als gewährleistet sein muß, daß das Meßrohr vollständig gegenüber dem des umgebenden Hüllrohr abgedichtet ist und darüber hinaus das Meßrohr bezüglich der im Füllrohr befestigten Ultraschall-Sendeempfänger exakt justiert ist. Ansonsten ist keine exakte Durchflußmessung möglich.

Bei dem aus der DE 34 28 058 A1 bekannten Durchflußgerät sind in den Wandungen der Meßstrecke Öffnungen vorgesehen, in denen jeweils ein zusätzlich gefertigtes Reflektionsteil eingefügt ist. Um Toleranzen auszugleichen, ist eines der Reflektionsteile einstellbar ausgebildet. Diese Ausführung weist viele Einzelteile auf.

Die Aufgabe der vorliegenden Erfindung besteht darin, ein möglichst einfach aufgebautes, aus möglichst wenig Teilen bestehendes Ultraschall-Durchflußmeßgerät zu schaffen, das besonders einfach gefertigt, insbesondere möglichst justage- und dichtungsfrei montiert, werden kann.

Die Aufgabe wird erfindungsgemäß gelöst mit einem Ultraschall-Durchflußmeßgerät, welches eine Armatur aufweist, die von einem Medium durchströmbar ist, wobei die Armatur zwei in Strömungsrichtung hintereinander angeordnete, eine Meßstrecke definierende Ultraschall-Sendeempfänger aufweist, wobei die Armatur im Bereich der Meßstrecke an zumindest einer Wandseite zumindest eine Ultraschall reflektierende Spiegelfläche zur Umlenkung eines Ultraschallsignals aufweist, und wobei auf einer weiteren Wandseite im Bereich der Spiegelflache eine Ausnehmung angeordnet ist, die als Bearbeitungsöffnung, insbesondere für eine Glättung, für die Spiegelfläche ausgebildet ist. Dadurch ist das Innere der Armatur, also der eigentliche Meßquerschnitt, auf einfache Weise zugänglich. Es ist daher insbesondere möglich, das Innere der Armatur bei der Herstellung derart zu bearbeiten, daß es den Ultraschall richtig reflektiert.

Die Ausnehmung ist im wesentlichen auf einer der Spiegelfläche gegenüberliegenden Wandseite angeordnet. Damit ist ein direkter Zugang gegeben, wobei auch einfache Bearbeitungswerkzeuge zur Anwendung kommen können.

Die Ausnehmung ist mit Vorteil mit einer Abdeckung verschließbar, auf der zumindest eine weitere Spiegelfläche angeordnet ist. Dadurch ist eine doppelte Nutzung der Ausnehmung gegeben.

Auf der Abdeckung können auch zwei oder mehrere Spiegelflächen angeordnet sein. Dadurch ist die Ausnehmung groß gestaltbar, wodurch auch die Zugänglichkeit von Werkzeugen für die Bearbeitung günstig ist. Die Spiegelfläche/n auf der Abdeckung ist/sind dabei bevorzugt erhaben. Damit ist die Abdeckung von außen glatt oder erhebungsfrei gestaltbar.

Die Ausnehmung erstreckt sich mit Vorteil etwa über den gesamten Bereich der Meßstrecke in Strömungsrichtung. Damit ist die gesamte Meßstrecke für eine Bearbeitung zugänglich. Die Armatur ist bevorzugt als Gußteil ausgebildet. Dadurch ist eine einfache Herstellbarkeit gegeben.

Die Armatur weist mit Vorteil ein im Einströmbereich angeordnetes Drallblech auf. Auf diese Weise sind gute Meßergebnisse erzielbar. Das Drallblech ist dabei bevorzugt in die Armatur eingegossen, wodurch - auch bei unterschiedlichen Materialien - eine Baueinheit gebildet ist.

Die Meßstrecke kann außermittig angeordnet sein, was einer günstigen Strömungsführung entgegenkommt. Die Armatur kann zusätzlich eine Einbaustelle für einen Temperaturmeßfühler aufweisen. Dadurch ist die Möglichkeit der Messung einer Wärmemenge in der Meßstrecke gegeben.

Die Abdeckung kann beispielsweise als Guß- Preß- oder Schmiedeteil ausgebildet sein, wobei die letzte Ausführung bevorzugt ist. Bevorzugt wird für die Armatur ein kostengünstiges Gußteil verwendet. Derartige Gußteile sind zwar relativ rauh, es ist aber, wie bereits erwähnt, eine Nachbearbeitung möglich. Darüber hinaus ist es möglich, die Armatur vollständig aus Metall zu fertigen. Das Durchflußmeßgerät ist dadurch sehr temperaturbeständig, z. B. bis 180° C anstatt bis nur 130° C beim Stand der Technik. Auch ist dadurch eine hohe Druckfestigkeit gegeben.

Die erfindungsgemäße Lösung kann alternativ auch allgemein beschrieben werden als Ultraschall-Durchflußmeßgerät mit zwei Ultraschall-Sendeempfängern und einem von einer Wand gebildeten Meßkanal, wobei die Wand mit einer Ultraschall-reflektierenden und einer Öffnung zum Hindurchführen eines Bearbeitungswerkzeugs für die Bearbeitung, insbesondere für eine Glättung, der Spiegelfläche versehen ist. Auf diese Weise ist die Herstellung oder Bearbeitung der Spiegelfläche sehr einfach. Kombinationen mit den obengenannten und nachfolgenden Details sind selbstverständlich möglich.

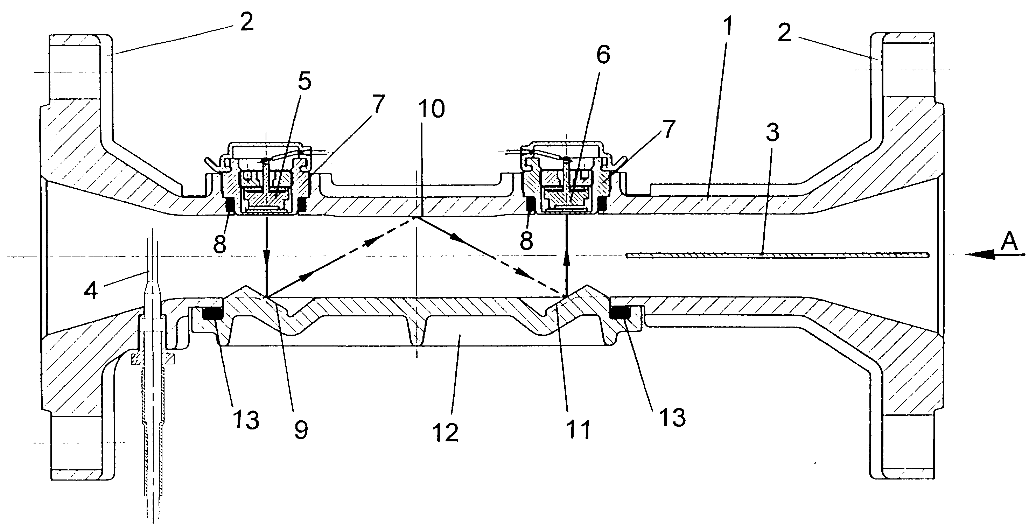

Weitere Vorteile und Einzelheiten ergeben sich aus der nachfolgenden Beschreibung eines Ausführungsbeispiels, anhand der Zeichnung sowie in Verbindung mit den weiteren Ansprüchen.

Die FIG zeigt einen Schnitt durch ein Ultraschall-Durchflußmeßgerät.

Gemäß der FIG umfaßt das Durchflußmeßgerät im wesentlichen eine Armatur 1, die über zwei Flansche 2 in eine nicht dargestellte Rohrleitung einfügbar ist. Die Armatur 1 wird von einem beliebigen Medium in Richtung des Pfeiles A durchströmt. Das Medium ist meist ein flüssiges Medium, oftmals Wasser. Es ist aber auch möglich, daß das Medium gasförmig ist. Die Armatur 1 bildet dabei mit ihrer Wand oder Wandung eine Meßstrecke oder einen Meßkanal.

Das einströmende Medium kann laminar oder auch turbulent strömen oder auch einen Drall aufweisen. Im Inneren der Armatur 1 ist daher im Bereich der Einlaßöffnung ein Drallblech 3 angeordnet. Es dient der Beruhigung einer etwaigen turbulenten Strömung und der Beseitigung eines Dralls. Die Meßgenauigkeit der Anordnung kann dadurch erhöht werden.

Das Drallblech 3 ist vorzugsweise in die Armatur 1 mit eingegossen. Dadurch kann ein relativ dünnes Blech von z. B. nur 1,5 mm Stärke verwendet werden. Wenn das Drallblech 3 dagegen mitgegossen würde, müßte es eine Stärke von ca. 5 mm aufweisen. Bei einer derartigen Stärke würde das Drallblech 3 selbst Wirbel verursachen, was gerade vermieden werden soll.

Im Auslauf der Armatur 1 ist ein Temperaturmeßfühler 4 angeordnet. Der Temperaturmeßfühler 4 kann beispielsweise eingeschraubt sein. Er ist außerhalb der Armatur 1 mit einer nicht dargestellten elektronischen Auswerteeinheit verbunden. Auf diese Weise kann beispielsweise auch eine Wärmemenge gemessen werden. Je nach Anwendung kann der Temperaturmeßfühler 4 aber auch entfallen. In diesem Fall ist die Einbaustelle für den Temperaturmeßfühler 4 selbstverständlich verschlossen, z. B. durch eine Schraube. Je nach Zweckbestimmung der Armatur 1 kann die Einbaustelle auch ganz entfallen.

Wie aus der FIG ersichtlich ist, weist die Armatur 1 zwei Ultraschall-Sendeempfänger 5, 6 auf, die in Strömungsrichtung gesehen hintereinander angeordnet sind. Die Ultraschall-Sendeempfänger 5, 6 sind, z. B. durch Aufnahmeteile 7 ebenfalls in die Armatur 1 eingeschraubt. Die Ultraschall-Sendeempfänger 5, 6 sind auch, ebenso wie der Temperaturmeßfühler 4, mit der nicht dargestellten elektronischen Auswerteeinheit verbunden. Die Abdichtung der Überwurfmuttern 7 gegenüber der Armatur 1 erfolgt durch O-Ringe 8.

Zur Messung der Durchflußmenge sendet der Sendeempfänger 5 ein Ultraschallsignal aus, daß über den Umlenkspiegel 9, die Spiegelfläche 10 und den Umlenkspiegel 11 dem Sendeempfänger 6 zugeführt wird. Sodann sendet der Sendeempfänger 6 ein Ultraschallsignal aus, daß auf umgekehrten Wege dem Sendeempfänger 5 zugeführt wird. Auf Grund der Strömungsgeschwindigkeit des Mediums im Innern der Armatur 1 ergibt sich ein Laufzeitunterschied zwischen diesen beiden Messungen. Dadurch kann aus dem Laufzeitunterschied auf die Durchflußmenge geschlossen werden. Diese Meßmethode ist allgemein bekannt und beispielsweise in der Zeitschrift "Technisches Messen" TM, Jahrgang 1979, Heft 4, Seite 145 beschrieben. Auf dieses Meßverfahren wird daher im folgenden nicht näher eingegangen.

Die Armatur 1 ist vorzugsweise, insbesondere aus Kostengründen, als Gußteil ausgebildet. Es weist daher eine relativ rauhe Oberfläche auf, und zwar sowohl innen als auch außen. Um Ultraschall gut reflektieren zu können, werden hingegen glatte Flächen benötigt, die als Spiegel bzw. Reflektoren wirken können. Die Armatur 1 ist daher im Bereich der Spiegelfläche 10 nachgeglättet, z. B. durch Fräsen, gegebenenfalls auch durch anschließendes Polieren. Hierzu muß die Spiegelfläche 10 selbstverständlich nach dem Gießen noch zugänglich sein. Die Armatur 1 weist daher im Bereich der Meßstrecke, die durch die Ultraschall-Sendeempfänger 5, 6 definiert ist, eine großflächige Ausnehmung auf, welche im Betrieb durch die Abdeckung 12 verschlossen ist. Die Abdeckung 12 ist vorzugsweise mit der Armatur 1 lösbar verbunden, z. B. mittels (nicht dargestellter) Schrauben. Die Abdichtung zwischen Armatur 1 und Abdeckung 12 wird durch den O-Ring 13 gewährleistet.

Die Abdeckung 12 ist vorzugsweise ein Schmiedeteil. Es ist daher möglich, die Umlenkspiegel 9, 11 als integrale Teile der Abdeckung 12 auszubilden, die nach dem Schmieden nur noch fein bearbeitet werden.

Die Spiegelfläche 10 ist also bei entfernter Abdeckung 12 für ein Werkzeug, z. B. einen Fräskopf, zur Nachbearbeitung nach dem Gießen zugänglich. Um darüber hinaus die Spiegelfläche 10 nicht nur zugänglich zu machen, sondern auch zu vermeiden, daß durch die Nachbearbeitung eine Stufe entsteht, ist die Spiegelfläche 10 gegenüber dem sie umgebenden Bereich der Armatur 1 erhaben. Der Fräskopf kann daher bei der Bearbeitung sanft auslaufen. Es entsteht keine Stufe in der Armatur, die wiederum Ursache von Wirbeln und damit Meßfehlern sein könnte. Aus dem gleichen Grund, nämlich zur Vermeidung von Wirbeln vor der Meßstrecke, ist auch der Temperaturmeßfühler 4 im Auslauf und nicht im Einlauf der Armatur 1 angeordnet.

Das Drallblech 3 wird nur im Einlaßbereich der Armatur 1 benötigt, da eine turbulente Strömung hinter der Meßstrecke für die Meßgenauigkeit ohne Belang sind. Die Armatur 1 kann daher kompakter gehalten werden, wenn die Meßstrecke außermittig, d. h. mehr auf die Auslaßseite hin, angeordnet ist.

Das erfindungsgemäße Durchflußmeßgerät kann beispielsweise in Heizungsanlagen bzw. bei der Fernwärmeversorgung zur Bestimmung der abgenommenen Wärmemenge verwendet werden. Hierzu wird das erfindungsgemäße Durchflußmeßgerät im Rücklauf der Heizungsanlage angeordnet. Im Vorlauf muß in diesem Fall ein zweiter Temperaturmeßfühler angeordnet sein. Es ist aber auch denkbar, daß Durchflußmeßgerät ganz allgemein zur Bestimmung der durchflossenen Flüssigkeit- bzw. Gasmenge zu verwenden.

Darüber hinaus kann mittels des Temperaturmeßfühlers auch die Temperatur des Mediums bestimmt werden. Selbstverständlich sind auch weitere Kombinationen und Ausführungen der hier beschriebenen Details im Rahmen des fachmännischen Handelns denkbar, ohne daß der Grundgedanke der vorliegenden Idee verlassen wird.

## Patentansprüche

1. Ultraschall-Durchflußmeßgerät mit einer Armatur (1), die von einem Medium durchströmbar ist, wobei die Armatur (1) zwei in Strömungsrichtung (A) hintereinander angeordnete, eine Meßstrecke definierende Ultraschall-Sendeempfänger (5, 6) aufweist, und wobei die Armatur(1) im Bereich der Meßstrecke an zumindest einer Wandseite zumindest eine Ultraschall reflektierende Spiegelfläche (10) zur Umlenkung eines Ultraschallsignals aufweist,
**dadurch gekennzeichnet,** daß
auf einer weiteren Wandseite im Bereich der Spiegelfläche (10) eine Ausnehmung angeordnet ist, die als Bearbeitungsöffnung, insbesondere für eine Glättung, für die Spiegelflache (10) ausgebildet ist.

2. Ultraschall-Durchflußmeßgerät nach Anspruch 1, **dadurch gekennzeichnet,** daß die Ausnehmung im wesentlichen auf einer der Spiegelfläche (10) gegenüberliegenden Wandseite angeordnet ist.

3. Ultraschall-Durchflußmeßgerät nach Anspruch 1 oder 2, **dadurch gekennzeichnet,** daß die Ausnehmung mit einer Abdeckung (12) verschließbar ist, auf der zumindest eine weitere Spiegelfläche (9,11) angeordnet ist.

4. Ultraschall-Durchflußmeßgerät nach Anspruch 3, **dadurch gekennzeichnet,** daß auf der Abdeckung (12) zwei Spiegelflächen (9,11) angeordnet sind.

5. Ultraschall-Durchflußmeßgerät nach Anspruch 3 oder 4 , **dadurch gekennzeichnet,** daß die Spiegelflache/n (9,11) auf der Abdeckung (12) erhaben ist/sind.

6. Ultraschall-Durchflußmeßgerät nach einem der Ansprüche 1 bis 5 , **dadurch gekennzeichnet,** die sich die Ausnehmung etwa über den gesamten Bereich der Meßstrecke in Strömungsrichtung (A) erstreckt.

7. Ultraschall-Durchflußmeßgerät nach einem der Ansprüche 1 bis 6 , **dadurch gekennzeichnet,** daß die Armatur (1) als Gußteil (1) ausgebildet ist.

8. Ultraschall-Durchflußmeßgerät nach einem der Ansprüche 1 bis 7, **dadurch gekennzeichnet,** daß die Armatur (1) ein im Einströmbereich angeordnetes Drallblech (3) aufweist.

9. Ultraschall-Durchflußmeßgerät nach Anspruch 8, **dadurch gekennzeichnet,** daß das Drallblech (3) in die Armatur (1) eingegossen ist.

10. Ultraschall-Durchflußmeßgerät nach einem der Ansprüche 1 bis 9, **dadurch gekennzeichnet,** daß die Meßstrecke außermittig angeordnet ist.

11. Ultraschall-Durchflußmeßgerät nach einem der Ansprüche 1 bis 10, **dadurch gekennzeichnet,** daß die Armatur (1) eine Einbaustelle für einen Temperaturmeßfühler (4) aufweist.

12. Ultraschall-Durchflußmeßgerät nach einem der Ansprüche 1 bis 11, **dadurch gekennzeichnet,** daß die Abdeckung (12) als Schmiedeteil (12) ausgebildet ist.

13. Ultraschall-Durchflußmeßgerät, insbesondere nach einem der obengeannten Ansprüche, mit zwei Ultraschall-Sendeempfängern (5, 6) und einem von einer Wand gebildeten Meßkanal, wobei die Wand mit einer Ultraschall-reflektierenden Spiegelflache (10) versehen ist,
**dadurch gekennzeichnet,** daß
die Wand mit einer Öffnung zum Hindurchführen eines Bearbeitungswerkzeugs für die Bearbeitung, insbesondere für eine Glattung, der Spiegelflache (10) versehen ist.

## Claims

1. Ultrasound flow meter with a fitting (1) through which a medium can flow, wherein the fitting (1) has two ultrasound transceiver receivers (5, 6) arranged one behind the other in the flow direction (A) and defining a measuring distance, and wherein the fitting (1) in the region of the measuring distance at at least one wall side has at least one ultrasound-reflecting reflector surface (10) for the deflection of an ultrasound signal, characterized in that on a further wall side in the region of the reflector surface (10) a recess is arranged which is constructed as a processing opening, in particular for a smoothing, for the reflector surface (10).

2. Ultrasound flow meter according to claim 1, characterized in that the recess is substantially arranged on a wall side opposite the reflector surface (10).

3. Ultrasound flow meter according to claim 1 or 2, characterized in that the recess can be sealed by a cover (12) on which at least one further reflector surface (9, 11) is arranged.

4. Ultrasound flow meter according to claim 3, characterized in that two reflector surfaces (9, 11) are arranged on the cover (12).

5. Ultrasound flow meter according to claim 3 or 4, characterized in that the reflector surface/s (9, 11) on the cover (12) is/are raised.

6. Ultrasound flow meter according to one of claims 1 to 5, characterized in that the recess extends approximately over the entire region of the measuring distance in the flow direction (A).

7. Ultrasound flow meter according to one of claims 1 to 6, characterized in that the fitting (1) is constructed as a cast part (1).

8. Ultrasound flow meter according to one of claims 1 to 7, characterized in that the fitting (1) has a swirl vane (3) arranged in the inflow region.

9. Ultrasound flow meter according to claim 8, characterized in that the swirl vane (3) is cast into the fitting (1).

10. Ultrasound flow meter according to one of claims 1 to 9, characterized in that the measuring distance is arranged eccentrically.

11. Ultrasound flow meter according to one of claims 1 to 10, characterized in that the fitting (1) has an installation point for a temperature sensor (4).

12. Ultrasound flow meter according to one of claims 1 to 11, characterized in that the cover (12) is constructed as a forged part (12).

13. Ultrasound flow meter, in particular according to one of the previously mentioned claims, with two ultrasound transceiver receivers (5, 6) and a measuring channel formed by a wall, wherein the wall is provided with an ultrasound-reflecting reflector surface (10), characterized in that the wall is provided with an opening for guiding through a processing tool for the processing, in particular for a smoothing, of the reflector surface (10).

## Revendications

1. Débitmètre à ultrasons comportant une armature (1), dans laquelle peut passer un fluide, l'armature (1) comportant deux émetteurs-récepteurs (5,6) à ultrasons montés l'un derrière l'autre dans la direction (A) d'écoulement et définissant une section de mesure, et l'armature (1) comportant dans la zone de la section de mesure, sur au moins une face de paroi, au moins une surface (10) de miroir réfléchissant un ultrason pour dévier un signal ultrasonore, caractérisé en ce qu'il est ménagé sur une face de paroi supplémentaire, dans la zone de la surface (10) réfléchissante, un évidement qui est réalisé en ouverture permettant un usinage de la surface (10) réfléchissante, notamment de la rendre lisse.

2. Débitmètre à ultrasons suivant la revendication 1, caractérisé en ce que l'évidement est ménagé pour l'essentiel sur une face de paroi faisant face à la surface (10) réfléchissante.

3. Débitmètre à ultrasons suivant la revendication 1 ou 2, caractérisé en ce que l'évidement peut être fermé par un recouvrement (12) sur lequel est ménagé au moins une surface (9,11) réfléchissante supplémentaire.

4. Débitmètre à ultrasons suivant la revendication 3, caractérisé en ce qu'il est ménagé deux surfaces (9,11) réfléchissantes sur le recouvrement (12).

5. Débitmètre à ultrasons suivant la revendication 3 ou 4, caractérisé en ce que la surface (9,11) réfléchissante ou les surfaces (9,11) réfléchissantes ménagée(s) sur le recouvrement (12) est (sont) bosselée(s).

6. Débitmètre à ultrasons suivant l'une des revendications 1 à 5, caractérisé en ce que l'évidement s'étend à-peu-près sur toute la zone de la section de mesure dans la direction (A) d'écoulement.

7. Débitmètre à ultrasons suivant l'une des revendications 1 à 6. caractérisé en ce que l'armature (1) est réalisée en pièce (1) moulée.

8. Débitmètre à ultrasons suivant l'une des revendications 1 à 7; caractérisé en ce que l'armature (1) comporte une tôle (3) à tourbillon disposée dans la zone d'afflux.

9. Débitmètre à ultrasons suivant la revendication 8, caractérisé en ce que la tôle (3) à tourbillon est scellée dans l'armature (1).

10. Débitmètre à ultrasons suivant l'une des revendications 1 à 9, caractérisé en ce que la section de mesure est disposée à l'extérieur du milieu.

11. Débitmètre à ultrasons suivant l'une des revendications 1 à 10, caractérisé en ce que l'armature (1) comporte un emplacement de montage pour un capteur (4) de température.

12. Débitmètre à ultrasons suivant l'une des revendications 1 à 11, caractérisé en ce que le recouvrement (12) est réalisé en pièce (12) forgée.

13. Débitmètre à ultrasons, notamment suivant l'une des revendications susmentionnées, comportant deux émetteurs-récepteurs (5,6) à ultrasons et un canal de mesure formé par une paroi, la paroi étant munie d'une surface (10) de miroir réfléchissant les ultrasons, caractérisé en ce que la paroi est munie d'une ouverture permettant de faire passer un outil d'usinage pour usiner la surface (10) réfléchissante, notamment pour la rendre lisse.
